# EUROPÄISCHE PATENTSCHRIFT

(11) **EP 3 277 866 B1**
(45) Veröffentlichungstag und Bekanntmachung des Hinweises auf die Patenterteilung: **22.07.2020**
(21) Anmeldenummer: 16716832.7
(22) Anmeldetag: 24.03.2016
(51) Int. Cl.: C25D 5/10, C25D 5/48, C25D 5/50, C25D 7/04

(54) **ROHRPRODUKT UND VERFAHREN ZU DESSEN HERSTELLUNG**
PIPE PRODUCT AND METHOD FOR PRODUCING SAME
PRODUIT TUYAU ET PROCÉDÉ DE FABRICATION

(30) Priorität: 30.03.2015 DE 102015104887
(43) Veröffentlichungstag der Anmeldung: 07.02.2018
(73) Patentinhaber: Benteler Steel/Tube GmbH, 33104 Paderborn (DE)
(72) Erfinder: MÜLLER, Ulrich, 33104 Paderborn (DE)
(74) Vertreter: Cullinane, Marietta Bettina
(86) Internationale Anmeldenummer: PCT/EP2016/056541
(87) Internationale Veröffentlichungsnummer: WO 2016/156198

(56) Entgegenhaltungen:
- EP-A1- 1 504 891
- EP-A1- 2 770 088
- EP-A2- 0 200 007
- DE-A1- 10 308 237
- US-A1- 2004 197 594

## Beschreibung

Die vorliegende Erfindung betrifft ein Rohrprodukt sowie ein Verfahren zu dessen Herstellung.

Zum Schutz von metallischen Oberflächen gegen Korrosion, insbesondere von Oberflächen von Stahlbauteilen, sind unterschiedliche Verfahren bekannt.

Hierbei ist die Verzinkung von Stahloberflächen heutzutage eine der effektivsten Methoden zum Schutz von Stahlbauteilen vor allgemeiner Korrosion. Einen besonders breiten Einsatz finden Zinküberzüge bei der Massenproduktion von Rohren, Karosseriebauteilen und dergleichen. Die Zinküberzüge beziehungsweise Zinkschichten dienen in einem Korrosionsmedium als Opferanode (bei einem guten elektrischen Kontakt mit den Stahloberflächen) infolge des unedleren Charakters des Zinks im Vergleich zum Eisen. Somit korrodiert zuerst die Zinkschicht, bevor das Eisen der Korrosion ausgesetzt wird und dabei rotbraune Korrosionsprodukte, die auch als Rotrost bezeichnet werden, bildet. Reines Zink zeigt in vielen Korrosionsmedien eine relativ hohe Korrosionsgeschwindigkeit unter Bildung voluminöser Weißrostprodukte, die auch als Weißrost bezeichnet werden.

Die Zinkkorrosion lässt sich jedoch durch entsprechende Legierung und/oder durch geeignete Nachbehandlungen der Zinkschicht stark verzögern. Im letzteren Fall handelt es sich hauptsächlich um ein so genanntes Passivierungsverfahren. Durch ein solches Verfahren wird auf einer mit Passivierungslösung behandelten Zinkschichtoberfläche eine dünne anorganische Schutzschicht erzeugt. Diese Schicht wird auch als Konversionsschicht bezeichnet, falls Kationen mindestens einer Komponente der metallischen Oberfläche herausgelöst und zum Schichtaufbau mit verwendet werden. Diese Schicht erhöht die Korrosionsbeständigkeit der Zinküberzüge und somit die Korrosionsbeständigkeit der verzinkten Stahlbauteile.

Die Passivierungsverfahren können sowohl für galvanisch verzinkte als auch für feuerverzinkte Teile angewendet werden. Speziell für galvanisch verzinkte Teile wurden verschiedene Chromatierungsverfahren entwickelt. Durch Behandeln mit einer entsprechenden chromhaltigen Passivierungslösung entstehen je nach Zusammensetzung dieser Lösung farblose, blaue, gelbe, olivgrüne oder schwarze Konversionsschichten, die sich in ihrem Schutzwert voneinander unterscheiden.

Die Passivierungsschicht dient vorwiegend zum temporären Korrosionsschutz der verzinkten Metalloberfläche, beispielsweise Rohroberflächen. Durch Handling, Transport, Lagerung oder Weiterverarbeitung der Rohre kann eine solche Schicht aber leicht verletzt werden, was zu einer Verschlechterung der Weißrostbeständigkeit führen kann.

In der EP 1 504 891 A1 wird ein mehrschichtig überzogenes, korrosionsbeständiges Produkt beschrieben. Hierbei wird auf einen Grundkörper eine Schutzschicht aufgebracht, die aus einer Zinkschicht, die metallisches Zink umfasst, einer Silikatschicht, die zumindest ein Silikat umfasst, und einer synthetischen Harzschicht, die zumindest einen Fluorkunstoff umfasst, besteht. Zudem ist in der US 2004/0197594 A1 ein Stahlmaterial, das auf seiner Oberfläche einen korrosionsbeständigen Beschichtungsfilm vom nicht-sechswertigen Chromtyp aufweist, der durch einen Verbund aus einer Metallschicht und einer Harzschicht gebildet ist, offenbart. In der EP 0 200 007 A1 ist ein Stahlstreifen offenbart, der oberflächenbeschichtet ist und eine verbesserte Korrosionsbeständigkeit und ein verbessertes Aussehen aufweist. Die EP 2 770 088 A1 offenbart hochkorrosionsfeste Stahlteile und Verfahren zu deren Herstellung. Auf der Oberfläche des Stahlteils ist eine Nickelschicht aufgebracht. Auf die Nickelschicht ist eine Zinknickelschicht aufgebracht und auf diese ist eine Passivierungsschicht aufgebracht.

Verzinkte und passivierte beziehungsweise chromatierten Bauteile, insbesondere Rohre, werden oft bei der Weiterverarbeitung einer starken Umformung unterworfen, welche das Verformungsvermögen der Konversionsschicht übersteigen. Bei einer solchen Umformung entstehen in der Konversionsschicht wegen ihrer Sprödigkeit unvermeidlich zahlreiche Risse, was zu einer erheblichen Verschlechterung der Weißrost- beziehungsweise Rotrostbeständigkeit der Rohroberfläche führt.

Aufgabe der vorliegenden Erfindung ist es, eine Lösung zu schaffen, mittels derer eine hohe Korrosionsbeständigkeit auch nach einer Umformung eines Rohrproduktes gewährleistet werden kann.

Gemäß einem ersten Aspekt betrifft die Erfindung ein Rohrprodukt mit einem Grundrohr aus einer Stahllegierung mit einer Innenumfangsfläche und einer Außenumfangsfläche, wobei das Grundrohr zumindest auf einem Teil der Umfangsflächen ein Beschichtungssystem aufweist, das den folgenden Schichtaufbau aufweist:
- Zinkschicht mit einem überwiegenden Zinkanteil;
- Passivierungsschicht, die Cr-VI-frei ist;
- Versiegelungsschicht
wobei die Zinkschicht mindestens drei Lagen umfasst, , wobei die Lagen separat voneinander und nacheinander aufgebrachte Lagen sind und die Lagen jeweils eine Schichtdicke von 1µm bis 10µm aufweisen,
die Versiegelungsschicht organische Verbindungen auf Basis von Kunststoffen aufweist und
die Versiegelungsschicht auf der Passivierungsschicht eine Schichtdicke zwischen 0,5 und 3µm aufweist.
Das Rohrprodukt ist dadurch gekennzeichnet, dass das Passivierungsmittel der Passivierungsschicht auf der Zinkschicht Chrom-III-Salze enthält.

Als Rohrprodukt wird erfindungsgemäß ein mit einem Beschichtungssystem versehenes Grundrohr bezeichnet. Zwischenprodukte, beispielsweise das mit einer Zinkschicht versehene Grundrohr werden im Folgenden auch als Rohr bezeichnet. Das Grundrohr besteht aus einer Stahllegierung und kann daher auch als Stahlsubstrat bezeichnet werden. Das Grundrohr stellt ein Hohlprofil dar. Der Querschnitt des Rohrproduktes und insbesondere des Grundrohres kann erfindungsgemäß rund, oval aber auch eckig sein. Das Grundrohr weist eine Innenumfangsfläche und eine Außenumfangsfläche auf. Das Grundrohr kann ein längsnahtgeschweißtes oder ein nahtloses Rohr sein.

Auf zumindest einem Teil der Umfangsflächen, das heißt der Innenumfangsfläche und/oder der Außenumfangsfläche ist erfindungsgemäß ein Beschichtungssystem aufgebracht. Vorzugsweise ist nur die Außenumfangsfläche mit dem Beschichtungssystem beschichtet. Es ist aber auch möglich das Beschichtungssystem beispielsweise sowohl auf der Außenumfangsfläche als auch auf der Innenumfangsfläche aufzubringen.

Als Beschichtungssystem wird hierbei eine Beschichtung bezeichnet, die aus mehreren Schichten besteht. Erfindungsgemäß weist das Beschichtungssystem den folgenden Schichtaufbau auf:
- Zinkschicht mit einem überwiegenden Zinkanteil;
- Passivierungsschicht;
- Versiegelungsschicht.

Die Schichten des Beschichtungssystems werden nacheinander auf das Grundrohr aufgebracht beziehungsweise darauf gebildet.

Das Rohrprodukt ist erfindungsgemäß dadurch gekennzeichnet, dass die Zinkschicht mindestens drei Lagen umfasst. Als Lagen werden hierbei Zinkbezüge bezeichnet, die separat voneinander nacheinander aufgebracht werden und somit abgeschlossene Lagen darstellen und gemeinsam als Zinkschicht bezeichnet werden. Die Lagen der Zinkschicht, die auch als Zinklagen bezeichnet werden, stellen somit kristalline Einzelschichten dar. Die Lagen der Zinkschicht sind im Querschliff des Beschichtungssystems erkennbar.

Die Passivierungsschicht stellt erfindungsgemäß eine Cr-VI-freie Schicht dar. Die Passivierungsschicht wird durch Aufbringen eines Passivierungsmittels auf die Zinkschicht, insbesondere die obere Zinklage beziehungsweise die zeitlich als letztes aufgetragene Zinklage, erzeugt. Als Passivierungsmittel wird erfindungsgemäß eine Zubereitung verwendet, die Chrom-III-Salze und gegebenenfalls Kobalt-II-Salze aufweist.

Auf der Passivierungsschicht wird eine Versiegelungsschicht gebildet. Die Versiegelungsschicht weist erfindungsgemäß organische Verbindungen auf oder besteht aus organischen Verbindungen. Als Versiegelungsmaterial oder - mittel zur Bildung der Versieglungsschicht kann erfindungsgemäß beispielsweise eine wässrige Dispersion mit Kunstoffen verwendet werden. Das Aufbringen der Versiegelungsschicht erfolgt beispielsweise durch Tauchen oder Sprühen. Alternativ oder zusätzlich kann die Versiegelungsschicht auch mittels mechanischer Verfahren, wie Pinsel-, Bürsten- oder Walzenauftrag aufgebracht werden.

Die Versiegelungsschicht des Beschichtungssystems weist erfindungsgemäß auf der Passivierungsschicht eine Schichtdicke zwischen 0,5 und 3µm auf. Vorzugsweise weist die die Versiegelungsschicht auf der Passivierungsschicht eine Schichtdicke zwischen 0,9 und 3µm auf. Es hat sich gezeigt, dass mit Versiegelungsschichten mit einer Schichtdicke in dem erfindungsgemäßen Bereich und insbesondere bei geringen Schichtdicken von <= 3µm zum einen der Schutz der darunter liegenden Schichten auch nach einer Umformung des Rohrproduktes gewährleistet werden kann und zum anderen ein Ablösen der Versiegelungsschicht bei der Umformung, beispielsweise an Biegerollen, was bei größerer Schichtdicke auftreten könnte, nicht auftritt.

Mit der vorliegenden Erfindung kann eine Reihe von Vorteilen erzielt werden. Zum einen kann durch das Aufbringen mehrerer Zinklagen auf das Grundrohr die Lagendicke der einzelnen Lagen gering gehalten werden und dennoch eine aus den Zinklagen gebildete Zinkschicht geschaffen werden, die eine ausreichende Schichtdicke aufweist, um eine Korrosion des Grundrohres zu verhindern. Durch die erfindungsgemäß mögliche geringe Lagendicke der einzelnen Zinklagen wird zudem das Umformvermögen des Beschichtungssystems gesteigert ohne den Korrosionsschutz wesentlich zu beeinträchtigen. Dies ist zumindest teilweise dadurch bedingt, dass die dünneren Zinklagen eine bessere Dehnbarkeit und geringere Rissneigung als dicke Zinkschichten aufweisen. Zinklagen mit geringer Lagendicke sind besser umformbar und Risse, insbesondere Oberflächenrisse, die bei einer größeren Lagendicke zu befürchten wären, können vermieden werden. Insbesondere liegen bei den geringen Lagendicken in den Zinklagen kleinere Kristalle vor und das Abgleiten im Kristallgitter ist geringer als bei einer einlagigen Zinkschicht, die durch Feuerverzinken aufgebracht wurde, in der grobe Kristallstrukturen vorliegen. Zudem können die Zinklagen aufgrund der Tatsache, dass diese in dem erfindungsgemäßen Beschichtungssystem eine geringe Dicke aufweisen können, in einem Durchlaufprozess, insbesondere Durchlaufverzinken, aufgebracht werden. Hierdurch wird die Herstellung des Rohrproduktes vereinfacht und verkürzt werden. Während bei einem Stückverzinken eine Stromdichte in dem Beschichtungsbad von beispielsweise 0,5 bis 3,5 A/dm³ einzustellen ist, wird bei der Durchlaufverzinkung eine Stromdichte von beispielsweise 20 bis 40 A/dm³ angelegt. Hierdurch verringert sich aber auch die erforderliche Behandlungsdauer. So kann zur Herstellung der erfindungsgemäßen Zinklagen jeweils eine Behandlungsdauer von beispielsweise 1 min ausreichen, während bei der Stückverzinkung eine Behandlungsdauer von beispielsweise 20 min erforderlich ist.

Indem zusätzlich zu dem Aufbringen mehrerer Zinklagen eine Passivierungsschicht gebildet wird, wird der Korrosionsschutz weiter verbessert. Da das Passivierungsmittel Cr-VI-frei ist, ist das Beschichtungssystem umweltfreundlich und es kann auch ein Spülen nach dem Aufbringen des Passivierungsmittels erfolgen ohne die Umwelt zu belasten.

Indem schließlich eine zumindest überwiegend organische Versiegelungsschicht aufgebracht wird, wird die Korrosionsbeständigkeit auch nach einer Umformung weiter verbessert. Die Versiegelungsschicht, insbesondere in der bevorzugten Schichtdicke, bringt einen Schutz vor Korrosionsfortschritt mit sich. Insbesondere wird durch die Versiegelungsschicht eine elastische Überbrückung von durch ein Umformen des Rohrproduktes verletzten Zinklagen erzielt. Die Versiegelungsschicht besteht vorzugsweise überwiegend aus organischen Verbindungen. Es liegt auch im Rahmen der Erfindung, dass die Versiegelungsschicht vollständig aus organischen Verbindungen besteht. Im Gegensatz zu anorganischen Versiegelungsmitteln sind die organischen Verbindungen, die in dem erfindungsgemäß verwendeten Versiegelungsmittel enthalten sind, flexibel, neigen nicht zu Rissbildungen und sind nicht spröde. Da zudem die Versiegelungsschicht des Beschichtungssystems erfindungsgemäß auf der Passivierungsschicht eine Schichtdicke zwischen 0,5 und 3µm aufweist, kann zum einen eine ausreichende Flexibilität und insbesondere Biegbarkeit der Versiegelungsschicht gewährleistet werden. Zum anderen ist die Schicht aber so dick, dass ein möglichst langer und zuverlässiger Korrosionsschutz sichergestellt wird.

Somit kann nach dem Aufbringen des Beschichtungssystems bei dem erfindungsgemäßen Rohrprodukt eine Umformung erfolgen, insbesondere kann das Rohr gebogen werden, ohne dass der Korrosionsschutz verringert wird.

Gemäß einer bevorzugten Ausführungsform weist die Versiegelungsschicht organische Verbindungen auf Basis von Kunststoffen, insbesondere Polymeren auf. Die organischen Verbindungen sind vorzugsweise Verbindungen auf der Basis von Polyestern und/oder Polyacrylaten auf. Es hat sich gezeigt, dass bei der Verwendung solcher organischer Verbindungen, insbesondere auf der Basis von oder Polyacrylaten, der Korrosionsschutz auch nach Umformung des Rohrproduktes gewährleistet werden kann.

Die Versiegelungsschicht kann wenigstens Polyester und/oder Polyacrylat mit einem Anteil von mindestens 70% aufweisen. Der Gehalt von Polyester und/oder Polyacrylat in dem Versieglungsmittel, das zur Bildung der Versiegelungsschicht aufgebracht wird, kann beispielsweise mindestens 15% betragen.

Zusätzlich zu Polyester und/oder Polyacrylat kann die Versiegelungsschicht vorzugsweise nanoskalige Siliziumoxidpartikel oder Silikate aufweisen. Die Größe der Partikel kann beispielsweise im Bereich von 15-70 nm, vorzugsweise im Bereich von 20 bis 60 nm liegen.

Erfindungsgemäß weisen die Lagen in der Zinkschicht jeweils eine Schichtdicke von 1µm bis 3µm auf. Mit diesen geringen Schichtdicken, beziehungsweise Lagedicken, kann der Effekt der besseren Umformbarkeit und insbesondere Dehnbarkeit und der Vermeidung von Rissen, insbesondere Oberflächenrissen, erzielt werden. Insbesondere wird bei dieser geringen Schichtdicke das Kristallwachstum auf die einzelnen Lagen beschränkt. Erfindungsgemäß können beispielsweise vier Zinklagen auf das Grundrohr nacheinander aufgebracht werden. Es liegt aber auch im Rahmen der Erfindung, dass die Anzahl der Zinklagen höher ist, beispielsweise 12 beträgt. Je höher die Anzahl der Zinklagen, umso geringer wird die Lagendicke oder Schichtdicke der jeweiligen Zinklagen eingestellt. Vorzugsweise weisen alle Zinklagen des Beschichtungssystems die gleiche Lagendicke auf.

Gemäß einer bevorzugten Ausführungsform weist die Zinkschicht eine Gesamtschichtdicke im Bereich von 3 bis 40µm, vorzugsweise im Bereich von 4 bis 25µm auf. Da die Zinkschicht aus mehreren Lagen gebildet ist, kann trotz dieser relativ großen Gesamtschichtdicke die Umformbarkeit der Zinkschicht und damit ein verbesserter Korrosionsschutz gewährleistet werden.

Mit der vorliegenden Erfindung können Rohrprodukte geschaffen werden, bei denen eine umgeformte Rohrbogenprobe des Rohrproduktes mit einem Biegewinkel von 180° und einem Biegeradius von 2,5xRohraußendurchmesser eine Weißrostbeständigkeit von mindestens 24 Stunden, bevorzugt mindestens 96 Stunden, und weiter vorzugsweise mindestens 168 Stunden, in der neutralen Salzsprühnebelprüfung nach DIN EN ISO 9227 aufweist. Als Weißrostbeständigkeit wird insbesondere der Zustand bezeichnet, in dem kein oder nur ein sehr geringfügiger Weißrostflächenanteil von vorzugsweise weniger als 2% vorliegt.

Gemäß einer Ausführungsform weist die umgeformte Rohrbogenprobe einen Längenabschnitt auf, der in axialer Richtung bogenförmig ausgebildet ist, wobei der Biegeradius an der Außenumfangsfläche mindestens 1,5xRohraußendurchmesser beträgt. Auch eine so umgeformtes Rohrbogenprobe weist aufgrund des erfindungsgemäßen Beschichtungssystems eine hohe Korrosionsbeständigkeit, insbesondere die oben genannten Weißrostbeständigkeiten von mindestens 24 Stunden, bevorzugt mindestens 96 Stunden und weiter bevorzugt von mindestens 168 Stunden auf.

Gemäß einem weiteren Aspekt betrifft die Erfindung ein Verfahren zur Herstellung eines Rohrproduktes. Das Verfahren ist dadurch gekennzeichnet, dass das Verfahren zumindest die folgenden Schritte zum Aufbringen eines Beschichtungssystems auf zumindest einem Teil der Umfangsflächen eines Grundrohres mit einer Innenumfangsfläche und einer Außenumfangsfläche umfasst:
- Aufbringen von mindestens drei Lagen einer Zinkbeschichtung mit einem überwiegenden Zinkanteil auf das Grundrohr aus einer Stahllegierung, wobei die Lagen (110) separat voneinander und nacheinander aufgebracht werden und die Lagen (110) jeweils eine Schichtdicke von 0,5µm bis 10µm aufweisen;
- Aufbringen eines Cr-VI-freien Passivierungsmittels, das Chrom-III-Salze enthält, zur Ausbildung einer Passivierungsschicht auf die Zinkbeschichtung;
- Aufbringen eines Versiegelungsmittels, das organische Verbindungen auf Basis von Kunststoffen aufweist, auf die Passivierungsschicht zum Ausbilden einer Versiegelungsschicht mit einer Schichtdicke zwischen 0,5 und 3µm.

Zunächst werden auf das Grundrohr aus einer Stahllegierung mindestens drei Lagen der Zinkschicht, die auch als Zinkbeschichtung bezeichnet wird, mit einem überwiegenden Zinkanteil aufgebracht. Hierbei wird zunächst eine erste Lage aufgebracht, in einem nächsten Schritt eine zweite und in weiteren Schritten die weiteren Zinklagen aufgebracht. Die Zinkbeschichtung, das heißt die einzelnen Lagen werden vorzugsweise mittels galvanischer Beschichtung, das galvanischem Verzinken, aufgebracht. Hierbei kann zwischen zwei aufeinanderfolgenden Schritten der Lagenaufbringung gegebenenfalls eine Trocknung erfolgen, obwohl ein Verfahren ohne solche Trocknungsschritte bevorzugt ist.

Auf die so erzeugte, mehrlagige Zinkschicht beziehungsweise Zinkbeschichtung wird ein Cr-VI-freies Passivierungsmittel zur Ausbildung einer Passivierungsschicht aufgebracht. Das Passivierungsmittel kann in einem Bad auf die Zinkbeschichtung aufgebracht werden.

In einem weiteren Schritt wird ein Versiegelungsmittel, das organische Verbindungen aufweist, zum Ausbilden einer Versiegelungsschicht mit einer Schichtdicke zwischen 0,5 und 3µm auf die Passivierungsschicht aufgebracht. Das Aufbringen des Versiegelungsmittels erfolgt unmittelbar nach dem Aufbringen beziehungsweise Ausbilden der Passivierungsschicht. Hierdurch kann eine Ausbildung einer Reaktionsschicht auf der Passivierungsschicht verhindert werden. Die Versiegelungsschicht kann beispielsweise mittels Sprühen oder Tauchen aufgebracht werden. Alternativ oder zusätzlich kann die Versiegelungsschicht auch mittels mechanischer Verfahren, wie Pinsel-, Bürsten- oder Walzenauftrag aufgebracht werden. Sowohl das Sprühen und Tauchen als auch die mechanischen Verfahren können im Durchlaufverfahren ausgeführt werden. Bei einer Kombination aus Tauchen oder Sprühen mit einem oder mehreren mechanischen Verfahren kann eine mechanische Schichtdickenbegrenzung durch Bürsten und/oder Abstreifer erfolgen und die Schichtdicke damit gezielt eingestellt werden.

Das erfindungsgemäße Verfahren ist nicht auf die angegebenen Schritte beschränkt. Beispielsweise kann vor dem Aufbringen der Zinkbeschichtung eine Vorbehandlung des Grundrohres, insbesondere eine Reinigung des Rohres durchgeführt werden.

Zudem kann auch eine Trocknung der auf die Passivierungsschicht aufgebrachten Versiegelungsschicht nach dem Aufbringen der Versiegelungsschicht erfolgen. Die Trocknung kann beispielsweise durch Druckluft, Heißluftgebläse oder schwächere Wärmestrahler, wie beispielsweise Infrarotstrahler, erfolgen.

Gemäß einer bevorzugten Ausführungsform werden die Verfahrensschritte zum Aufbringen des Beschichtungssystems als kontinuierliches Verfahren, insbesondere als ein Durchlaufverfahren, durchgeführt.

Die Durchsatzrate, mit der das Grundrohr in dem Verfahren behandelt wird, kann erfindungsgemäß mindestens 5m/min vorzugsweise mindestens 10m/min betragen.

Die Durchführung des Verfahrens als kontinuierliches Verfahren ist insbesondere aufgrund der Tatsache möglich, dass die einzelnen Zinklagen, die aufgebracht werden, eine geringe Dicke aufweisen. Hierdurch wird die Herstellung des Rohrproduktes vereinfacht und verkürzt werden. Während bei einem Stückverzinken eine Stromdichte in dem Beschichtungsbad von beispielsweise 0,5 bis 3,5 A/dm³ einzustellen ist, wird bei der Durchlaufverzinkung eine Stromdichte von beispielsweise 20 bis 40 A/dm³ angelegt. Hierdurch verringert sich aber auch die erforderliche Behandlungsdauer. So kann zur Herstellung der erfindungsgemäßen Zinklagen jeweils eine Behandlungsdauer von beispielsweise 1 min ausreichen, während bei der Stückverzinkung eine Behandlungsdauer von beispielsweise 20 min erforderlich ist und mit dieser daher kein Durchlaufverzinken möglich ist. Das Aufbringen der einzelnen Zinklagen erfolgt vorzugsweise in einem sauren galvanischen Zink-Hochleistungsbad. Auch das Aufbringen der weiteren Schichten des Beschichtungssystems, insbesondere der Passivierungsschicht und der Versiegelungsschicht erfolgt erfindungsgemäß vorzugsweise in einem Durchlaufverfahren. Somit kann insbesondere das Aufbringen des gesamten Beschichtungssystems des Rohrproduktes gemäß der Erfindung in einem kontinuierlichen Verfahren erfolgen.

Gemäß einer Ausführungsform wird das Rohrprodukt nach dem Aufbringen des Beschichtungssystems umgeformt. Beispielsweise kann das Rohprodukt aufgeweitet, gestaucht, gebördelt werden oder dessen Querschnitt anderweitig verändert.

Vorzugsweise kann das Rohrprodukt gebogen werden. Diese Ausführungsform weist den Vorteil auf, dass das Aufbringen des Beschichtungssystems in einem kontinuierlichen Verfahren erfolgen kann und erst im Anschluss daran die gewünschte Form des Halbzeuges oder Fertigproduktes durch Umformen hergestellt wird. Eine solche Umformung des beschichteten Rohrproduktes ist bei der vorliegenden Erfindung möglich, da durch den Aufbau des Beschichtungssystems auch bei und nach einer Umformung des Rohrproduktes eine Korrosionsbeständigkeit, insbesondere Weißrostbeständigkeit weiterhin zuverlässig gewährleistet werden kann.

Gemäß einer weiteren Ausführungsform wird das Rohrprodukt vor und/oder nach dem Aufbringen der Versiegelungsschicht erwärmt, vorzugsweise induktiv erwärmt. Eine Erwärmung vor dem Aufbringen der Versiegelungsschicht dient insbesondere zum Trocknen des Passivierungsmittels. Eine Erwärmung nach dem Aufbringen der Versiegelungsschicht hingegen dient zur Vernetzung des in der Versiegelungsschicht vorzugsweise enthaltenen Kunststoffes. Alternativ oder zusätzlich zu der induktiven Erwärmung können auch andere Arten der Erwärmung verwendet werden. Beispielsweise kann Heißluft verwendet werden.

Die vorliegende Erfindung wird nun erneut anhand der beiliegenden Zeichnungen erneut erläutert. Es zeigen:
Figur 1: eine schematische Blockdarstellung einer Anlage zum Durchführen einer Ausführungsform des erfindungsgemäßen Verfahrens;
Figur 2: eine schematische Darstellung einer Ausführungsform des erfindungsgemäßen Rohrproduktes;
Figur 3: eine schematische Schnittansicht des Schichtaufbaus des Beschichtungssystems auf einem Rohr;
Figur 4: eine Rohrprobe eines erfindungsgemäßen Rohrproduktes im Vergleich zu zwei Rohrproben von konventionell verzinkten und passivierten Rohren beim neutralen Salzsprühtest (NSS Test) nach DIN EN ISO 9227 nach 96 Stunden; und
Figur 5: eine Rohrprobe eines erfindungsgemäßen Rohrproduktes im Vergleich zu zwei Rohrproben von konventionell verzinkten und passivierten Rohren beim neutralen Salzsprühtest (NSS Test) nach DIN EN ISO 9227 nach 168 Stunden.

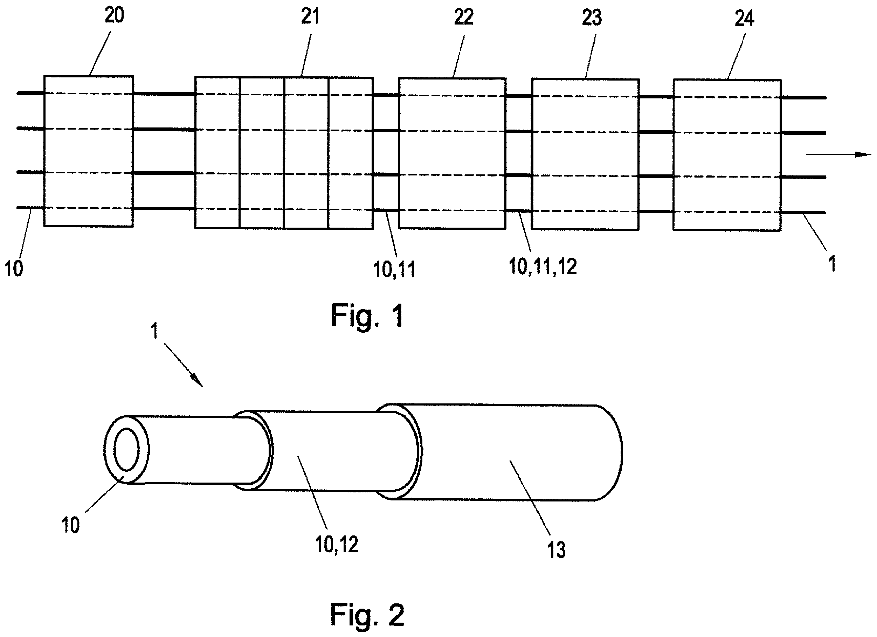

In Figur 1 ist eine schematische Blockdarstellung einer Anlage zum Durchführen einer Ausführungsform des erfindungsgemäßen Verfahrens gezeigt. Die Anlage ist in Figur 1 als Vier-Strang Anlage gezeigt, in der vier Grundrohe 10 gleichzeitig behandelt werden können.

In einer Vorbehandlungsvorrichtung 20 wird das Grundrohr 10 vorbehandelt und insbesondere gereinigt. In einer Verzinkungsvorrichtung 21 wird die Zinkschicht oder Zinkbeschichtung 11 auf das Grundrohr 10 aufgebracht. In einer Passivierungsvorrichtung 22 wird eine Passivierungsschicht 12 auf der Zinkschicht 11 ausgebildet. Das so beschichtete Rohr wird in der in Figur 1 gezeigten Ausführungsform anschließend einer Induktionsvorrichtung 23 zugeführt, in der das Passivierungsmittel der Passivierungsschicht 12 getrocknet wird. Schließlich wird das Rohr einer Versiegelungsvorrichtung 24 zugeführt, in der die Versiegelungsschicht 13 auf die Passivierungsschicht 12 aufgebracht wird. Der Versiegelungsvorrichtung 24 kann eine weitere Heizvorrichtung, beispielsweise eine Heißluftvorrichtung (nicht gezeigt) nachgeschaltet sein, in der die Versiegelungsschicht 13, insbesondere durch Vernetzen von Kunststoffen des Versiegelungsmaterials ausgehärtet wird.

Die Verzinkungsvorrichtung 21 ist in der dargestellten Ausführungsform vierstufig aufgebaut. Beispielsweise können vier galvanische Verzinkungsbäder hintereinander geschaltet sein. Zwischen den einzelnen Stufen der Verzinkungsvorrichtung 21, insbesondere zwischen den Bädern, können Trockenvorrichtungen (nicht gezeigt) vorgesehen sein, die die jeweils in der davorliegenden Stufe erzeugte Zinklage 110 trocknen. Mit der in Figur 1 gezeigten Anlage wird eine Zinkschicht 11 erzeugt, die vier Lagen 110 aufweist. Durch die Länge der einzelnen Stufen der Verzinkungsvorrichtung und/oder den angelegten Strom der galvanischen Bäder kann in Kombination mit der Durchsatzrate eine gewünschte Schichtdicke der einzelnen Zinklagen 110 eingestellt werden. Die Durchsatzrate kann bei dem erfindungsgemäßen Verfahren beispielsweise mindestens 5m/min und vorzugsweise mindestens 10m/min betragen. Die weiteren Parameter, wie beispielsweise Badlänge und Strom werden vorzugsweise so gewählt, dass die Schichtdicke der einzelnen Zinklagen 110 im Bereich von 1µm bis 10µm und vorzugsweise im Bereich von 0,5 bis 3µm liegt. Hierdurch kann eine Zinkschicht 11 mit einer Gesamtschichtdicke von 4µm bis 40µm auf das Grundrohr 10 aufgebracht werden.

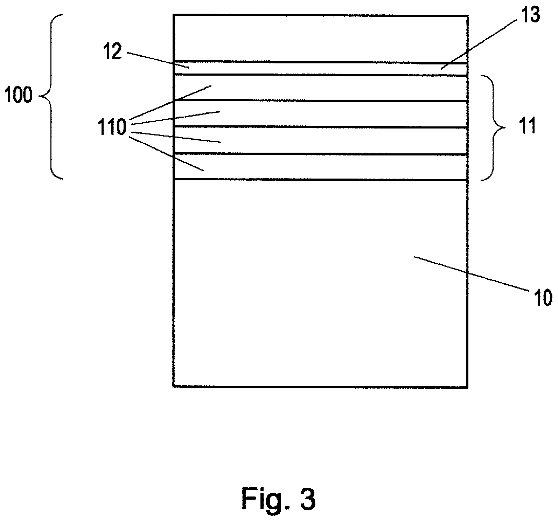

Der Aufbau des Beschichtungssystems 100 ist in der Figur 3 erneut schematisch dargestellt. In dieser Ausführungsform sind auf dem Grundrohr 10 vier Zinklagen 110 aufgebracht, die die Zinkschicht 11 bilden. Auf der Zinkschicht 11 ist eine Passivierungsschicht 12 aufgebracht, auf die eine Versiegelungsschicht 13 aufgebracht ist. Wie sich aus dieser schematischen Darstellung erkennen lässt, sind die einzelnen Schichten des Beschichtungssystems 100 relativ dünn, wodurch das Beschichtungssystem 100 auch bei einer Umformung des Rohrproduktes 1 nicht beschädigt wird.

Mit der in Figur 1 gezeigten Anlage kann ein kontinuierliches Verfahren durchgeführt werden. Insbesondere kann das Aufbringen des Beschichtungssystems 100, das aus der Zinkschicht 11, der Passivierungsschicht 12 und der Versiegelungsschicht 13 besteht, in einem Durchlaufverfahren durchgeführt erfolgen. Die Durchsatzrate kann bei dem erfindungsgemäßen Verfahren beispielsweise mindestens 5m/min und vorzugsweise mindestens 10m/min betragen, das heißt das Grundrohr wird mit dieser Geschwindigkeit durch die Vorrichtungen 20 bis 24 geführt bis das erfindungsgemäße Rohrprodukt 1 erhalten ist.

Eine schematische Darstellung eines Rohrproduktes 1 ist in Figur 2 schematisch gezeigt, wobei zur besseren Erkennbarkeit einzelne Schichten des Beschichtungssystems 1 teilweise nicht gezeigt sind.

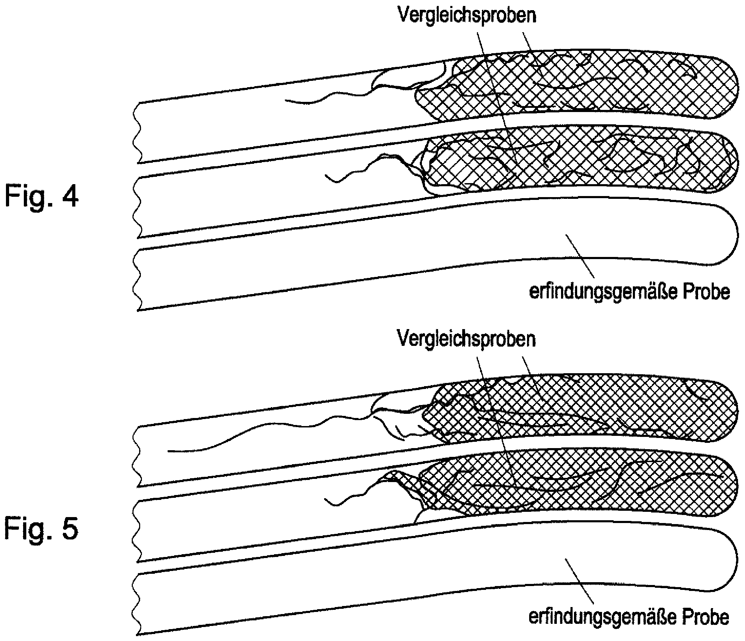

In Figur 4 ist eine Rohrprobe eines erfindungsgemäßen Rohrproduktes im Vergleich zu zwei Rohrproben von konventionell verzinkten und passivierten Rohren beim neutralen Salzsprühtest (NSS Test) nach DIN EN ISO 9227 nach 96 Stunden gezeigt. Die Rohrproben weisen einen Durchmesser von 15mm und eine Wandstärke von 1,2mm auf. Die Rohrproben sind um 180° mit einem Biegeradius von 2,5xRohraußendurchmesser gebogen worden. Die Proben, die auch als Rohrbögen bezeichnet werden, wurden hierbei nach dem Aufbringen des Beschichtungssystems gebogen. Wie in Figur 4 zu sehen ist, zeigen die konventionell beschichteten Rohr-Bögen schon nach 96 Stunden einen starken Weißrost. Der Rohr-Bogen aus dem erfindungsgemäßen Rohrprodukt hingegen zeigt im Wesentlichen keinen Weißrost.

In Figur 5 ist eine Rohrprobe eines erfindungsgemäßen Rohrproduktes im Vergleich zu zwei Rohrproben von konventionell verzinkten und passivierten Rohren beim neutralen Salzsprühtest (NSS Test) nach DIN EN ISO 9227 nach 168 Stunden gezeigt. Die Rohrproben weisen einen Durchmesser von 15mm und eine Wandstärke von 1,2mm auf. Die Rohrproben sind um 180° mit einem Biegeradius von 2,5xRohraußendurchmesser gebogen worden. Auch aus dieser Figur 5 lässt sich erkennen, dass selbst nach 168 Stunden der Rohr-Bogen aus dem erfindungsgemäßen Rohrprodukt im wesentlichen keinen Weißrost zeigt, während der Weißrostbefall an den Vergleichsproben weiter zugenommen hat.

Die Erfindung ist nicht auf die gezeigten Ausführungsformen beschränkt. Beispielsweise kann das Rohrprodukt auf der Versiegelungsschicht eine zusätzliche Lackschicht aufweisen, die beispielsweise durch Pulverlackierung oder Nasslackierung auf die Versiegelungsschicht aufgebracht ist. Diese Lackschicht dient im Wesentlichen dekorativen Zwecken und ist erfindungsgemäß nicht erforderlich, da die Korrosionsbeständigkeit durch das erfindungsgemäße Beschichtungssystem ausreichend ist.

### Bezugszeichenliste

- 1: Rohrprodukt
- 10: Grundrohr
- 100: Beschichtungssystem
- 11: Zinkschicht
- 110: Lage
- 12: Passivierungsschicht
- 13: Versiegelungsschicht
- 20: Vorbehandlungsvorrichtung
- 21: Verzinkungsvorrichtung
- 22: Passivierungsvorrichtung
- 23: Induktionsvorrichtung
- 24: Versiegelungsvorrichtung

## Patentansprüche

1. Rohrprodukt (1) mit einem Grundrohr (10) aus einer Stahllegierung mit einer Innenumfangsfläche und einer Außenumfangsfläche, wobei das Grundrohr (10) zumindest auf einem Teil der Umfangsflächen ein Beschichtungssystem (100) aufweist, das den folgenden Schichtaufbau aufweist:
- Zinkschicht (11) mit einem überwiegenden Zinkanteil;
- Passivierungsschicht (12), die Cr-VI-frei ist;
- Versiegelungsschicht (13);
wobei die Zinkschicht (11) mindestens drei Lagen (110) umfasst, wobei die Lagen (110) separat voneinander und nacheinander aufgebrachte Lagen sind und die Lagen (110) jeweils eine Schichtdicke von 1µm bis 10µm aufweisen,
die Versiegelungsschicht (13) organische Verbindungen auf Basis von Kunststoffen aufweist und
die Versiegelungsschicht (13) auf der Passivierungsschicht (12) eine Schichtdicke zwischen 0,5 und 3µm aufweist, **dadurch gekennzeichnet, dass** das Passivierungsmittel der Passivierungsschicht auf der Zinkschicht Chrom-III-Salze enthält.

2. Rohrprodukt nach Anspruch 1, **dadurch gekennzeichnet, dass** die organischen Verbindungen in der Versiegelungsschicht (13) organische Verbindungen auf Basis von Polyestern und/oder Polyacrylaten aufweist.

3. Rohrprodukt nach einem der Ansprüche 1 oder 2, **dadurch gekennzeichnet, dass** die Versiegelungsschicht (13) nanoskalige Siliziumoxidpartikel aufweist.

4. Rohrprodukt nach einem der Ansprüche 1 bis 3, **dadurch gekennzeichnet, dass** die Zinkschicht (11) eine Gesamtschichtdicke im Bereich von 3 bis 40µm, vorzugsweise im Bereich von 4 bis 25µm aufweist.

5. Rohrprodukt nach einem der Ansprüche 1 bis 4, **dadurch gekennzeichnet, dass** eine umgeformten Rohrbogenprobe des Rohrproduktes (1) mit einem Biegewinkel von 180° und einem Biegeradius von mindestens 1,5xRohraußendurchmesser eine Weißrostbeständigkeit von mindestens 24 Stunden, weiter bevorzugt mindestens 96 Stunden, und weiter bevorzugt von mindestens 168 Stunden, in der neutralen Salzsprühnebelprüfung nach DIN EN ISO 9227 aufweist.

6. Rohrprodukt nach Anspruch 5, **dadurch gekennzeichnet, dass** die Rohrbogenprobe des Rohrproduktes (1) einen Längenabschnitt aufweist, der in axialer Richtung bogenförmig ausgebildet ist, wobei der Biegeradius an der Außenumfangsfläche 2,5xRohraußendurchmesser beträgt.

7. Verfahren zur Herstellung eines Rohrproduktes, **dadurch gekennzeichnet, dass** das Verfahren zumindest die folgenden Schritte zum Aufbringen eines Beschichtungssystems (100) auf zumindest einem Teil der Umfangsflächen eines Grundrohres (10) mit einer Innenumfangsfläche und einer Außenumfangsfläche umfasst:
- Aufbringen von mindestens drei Lagen (110) einer Zinkschicht (11) mit einem überwiegenden Zinkanteil auf das Grundrohr (10) aus einer Stahllegierung, wobei die Lagen (110) separat voneinander und nacheinander aufgebracht werden und die Lagen (110) jeweils eine Schichtdicke von 0,5µm bis 10µm aufweisen;
- Aufbringen eines Cr-VI-freien Passivierungsmittels, das Chrom-III-Salze enthält, zur Ausbildung einer Passivierungsschicht (12) auf die Zinkschicht (11);
- Aufbringen eines Versiegelungsmittels, das organische Verbindungen auf Basis von Kunststoffen aufweist, auf die Passivierungsschicht (12) zum Ausbilden einer Versiegelungsschicht (13) mit einer Schichtdicke zwischen 0,5 und 3µm.

8. Verfahren nach Anspruch 7, **dadurch gekennzeichnet, dass** die Verfahrensschritte zum Aufbringen des Beschichtungssystems (100) als kontinuierliches Verfahren, insbesondere als ein Durchlaufverfahren, durchgeführt werden.

9. Verfahren nach Anspruch 8, **dadurch gekennzeichnet, dass** die Durchsatzrate mindestens 5m/min vorzugsweise mindestens 10m/min beträgt.

10. Verfahren nach einem der Ansprüche 7 bis 9, **dadurch gekennzeichnet, dass** das Rohrprodukt (1) nach dem Aufbringen des Beschichtungssystems (100) umgeformt, insbesondere gebogen wird.

11. Verfahren nach einem der Ansprüche 7 bis 10, **dadurch gekennzeichnet, dass** das Rohr vor und/oder nach dem Aufbringen der Versiegelungsschicht (13) erwärmt, vorzugsweise induktiv erwärmt wird.

## Claims

1. Pipe product (1) comprising a base pipe (10) made of a steel alloy having an inner circumferential surface and an outer circumferential surface, wherein the base tube (10) has a coating system (100) on at least part of the circumferential surfaces, the coating system (100) having the following layered structure:
- zinc coating (11) having a predominant zinc portion;
- a passivation layer (12) that is free of Cr-VI;
- sealing layer (13);
wherein the zinc layer (11) comprises at least three tiers (110), the tiers (110) being separately and sequentially applied layers, and the tiers (110) each having a layer thickness of 1 µm to 10 µm,
the sealing layer (13) comprises organic compounds based on plastics and
the sealing layer (13) on the passivation layer (12) has a layer thickness between 0.5 and 3 µm, **characterized in that** the passivating agent of the passivation layer on the zinc layer contains chromium-III-salts.

2. Pipe product according to claim 1, **characterised in that** the organic compounds in the sealing layer (13) comprise organic compounds based on polyesters and/or polyacrylates.

3. Pipe product according to one of claims 1 or 2, **characterised in that** the sealing layer (13) comprises nanoscale silicon oxide particles.

4. Pipe product according to one of claims 1 to 3, **characterised in that** the zinc layer (11) has a total layer thickness in the range of 3 to 40 µm, preferably in the range of 4 to 25 µm.

5. Pipe product according to one of claims 1 to 4, **characterised in that** a formed pipe bend sample of the pipe product (1) with a bending angle of 180° and a bending radius of at least 1.5x the outer diameter of the pipe has a white rust resistance of at least 24 hours, more preferably at least 96 hours, and further more preferably at least 168 hours, in the neutral salt spray test according to DIN EN ISO 9227.

6. Pipe product according to claim 5, **characterised in that** the pipe bend sample of the pipe product (1) has a longitudinal portion which is shaped in curved shape in the axial direction, the bending radius on the outer circumferential surface being 2.5x the outer diameter of the pipe.

7. Method for producing a pipe product, **characterized in that** the method comprises at least the following steps for applying a coating system (100) on at least a part of the circumferential surfaces of a base tube (10) having an inner circumferential surface and an outer circumferential surface:
- applying at least three tiers (110) of a zinc layer (11) having a predominant zinc portion to the base pipe (10) made of a steel alloy, wherein the tiers (110) are applied separately from each other and subsequently, and the tiers (110) each have a layer thickness of 0.5 µm to 10 µm;
- applying a Cr-VI-free passivating agent containing chromium III salts to form a passivation layer (12) on the zinc layer (11);
- applying a sealing agent comprising organic compounds based on plastics to the passivation layer (12) to form a sealing layer (13) having a layer thickness of between 0.5 and 3 µm.

8. Method according to claim 7, **characterised in that** the method steps for applying the coating system (100) are carried out as a continuous process, in particular as a throughput process.

9. Method according to claim 8, **characterized in that** the throughput rate is at least 5m/min, preferably at least 10m/min.

10. Method according to one of claims 7 to 9, **characterized in that** the pipe product (1) is formed, in particular bent, after application of the coating system (100).

11. Method according to one of claims 7 to 10, **characterised in that** the pipe is heated, preferably inductively heated, before and/or after application of the sealing layer (13).

## Revendications

1. Produit tubulaire (1) comprenant un tube de base (10) fait d'un alliage d'acier ayant une surface circonférentielle intérieure et une surface circonférentielle extérieure, dans lequel le tube de base (10) a un système de revêtement (100) sur au moins une partie des surfaces circonférentielles, le système de revêtement (100) ayant la structure en couches suivante :
- revêtement de zinc (11) ayant une portion de zinc prédominante ;
- une couche de passivation (12) qui est exempte de Cr-VI ;
- une couche d'étanchéité (13) ;
dans lequel la couche de zinc (11) comprend au moins trois strates (110), les strates (110) étant des couches appliquées séparément et séquentiellement, et les strates (110) ayant chacune une épaisseur de couche de 1 µm à 10 µm,
la couche d'étanchéité (13) comprend des composés organiques à base de plastique et
la couche d'étanchéité (13) sur la couche de passivation (12) a une épaisseur de couche comprise entre 0,5 et 3 µm, **caractérisée en ce que** l'agent de passivation de la couche de passivation sur la couche de zinc contient des sels de chrome-III.

2. Produit tubulaire selon la revendication 1, **caractérisé en ce que** les composés organiques dans la couche d'étanchéité (13) comprennent des composés organiques à base de polyesters et/ou de polyacrylates.

3. Produit tubulaire selon l'une des revendications 1 ou 2, **caractérisé en ce que** la couche d'étanchéité (13) comprend des particules d'oxyde de silicium à l'échelle nanométrique.

4. Produit tubulaire selon l'une des revendications 1 à 3, **caractérisé en ce que** la couche de zinc (11) présente une épaisseur de couche totale dans la plage de 3 à 40 µm, de préférence dans la plage de 4 à 25 µm.

5. Produit tubulaire selon l'une des revendications 1 à 4, **caractérisé en ce qu'**un échantillon de cintrage de tube formé du produit tubulaire (1) avec un angle de cintrage de 180° et un rayon de cintrage d'au moins 1,5 fois le diamètre extérieur du tube présente une résistance à la rouille blanche d'au moins 24 heures, de préférence d'au moins 96 heures, et de préférence d'au moins 168 heures, dans l'essai au brouillard salin neutre selon DIN EN ISO 9227.

6. Produit tubulaire selon la revendication 5, **caractérisé en ce que** l'échantillon coude du produit tubulaire (1) présente une partie de longueur qui est courbée dans la direction axiale, le rayon de courbure sur la surface circonférentielle extérieure étant de 2,5 fois le diamètre extérieur du tube.

7. Procédé de fabrication d'un produit tubulaire, **caractérisé en ce que** le procédé comprend au moins les étapes suivantes pour appliquer un système de revêtement (100) sur au moins une portion des surfaces circonférentielles d'un tube de base (10) ayant une surface circonférentielle intérieure et une surface circonférentielle extérieure :
- application d'au moins trois strates (110) d'une couche de zinc (11) ayant une portion prédominante en zinc sur le tube de base (10) fait d'un alliage d'acier, dans lequel les strates (110) sont appliquées séparément les unes des autres et séquentiellement, et les strates (110) ont chacune une épaisseur de couche de 0,5 µm à 10 µm ;
- l'application d'un agent de passivation sans Cr-VI contenant des sels de chrome-III pour former une couche de passivation (12) sur la couche de zinc (11) ;
- l'application d'un agent d'étanchéité comprenant des composés organiques à base de matières plastiques sur la couche de passivation (12) pour former une couche d'étanchéité (13) ayant une épaisseur de couche comprise entre 0,5 et 3 µm.

8. Procédé selon la revendication 7, **caractérisé en ce que** les étapes de procédé pour l'application du système de revêtement (100) sont réalisées en tant que processus continu, en particulier en tant que processus de passage.

9. Procédé selon la revendication 8, **caractérisé en ce que** le débit est d'au moins 5 m/min, de préférence d'au moins 10 m/min.

10. Procédé selon l'une des revendications 7 à 9, **caractérisé en ce que** le produit tubulaire (1) est formé, en particulier plié, après application du système de revêtement (100).

11. Procédé selon l'une des revendications 7 à 10, **caractérisé en ce que** le tuyau est chauffé, de préférence par induction, avant et/ou après l'application de la couche de d'étanchéité (13).
